# EUROPEAN PATENT SPECIFICATION

(11) **EP 2 719 551 B1**
(45) Date of publication and mention of the grant of the patent: **24.06.2015**
(21) Application number: 12464019.4
(22) Date of filing: 15.10.2012
(51) Int. Cl.: B60C 23/04

(54) **Method and system for monitoring a parameter of a tire of a vehicle**
System und Verfahren zur Überwachung der Parameter eines Reifens eines Fahrzeugs
Système et procédé de surveillance de paramètre d'un pneu de véhicule

(43) Date of publication of application: 16.04.2014
(73) Proprietor: Continental Automotive GmbH, 30165 Hannover (DE)
(72) Inventor: Toth, Alexandru, 300152 Timisoara (RO)

(56) References cited:
- EP-A2- 1 043 179
- WO-A2-02/057097
- CN-A- 102 285 306
- US-A1- 2008 018 448

## Description

The present invention relates to a method and a system for monitoring a parameter of a tire of vehicle using a wheel unit assigned to the tire, wherein the wheel unit is adapted to send data packets relating to the parameter of the tire to a vehicle based receiver.

It is known to equip motor vehicles with tire pressure monitoring systems. These systems generally comprise a device fixed to the inside of the tire, which is called a wheel unit. This wheel unit measures the pressure inside the tire and also a certain number of other parameters such as, for example, the temperature. The measured values are sent to a control unit located in the vehicle. The control unit is responsible for warning the driver of any pressure defect in one of the tires.

Such directly measuring tire pressure monitoring systems represent in-car wireless networks. The article "security and privacy vulnerabilities of in-car wireless networks: a tire pressure monitoring system case study" by Ishtiaq Rouf, Rob Miller, Hossen Mustafa, Travis Taylor, Sangho Oh, Wenyuan Xu, Marco Gruteser, Wade Trappe, and Ivan Seskar published in the Proceedings of the 19th USENIX Security Symposium held in Washington DC on August 11-13, 2010 deals with security concerns of tire pressure monitoring systems. This article discusses that current tire pressure monitoring systems do not use any type of security mechanisms. For example, messages are not authenticated. As a consequence, it is possible to inject spoofed messages and illuminate the low tire pressure warning light of a car travelling at highway speed from another nearby car. This security vulnerability would allow, for example, robbers to make drivers believe that they have a problem with one of their tires, such that they stop at the road side, where they can be easily robbed.

From the prior art various security mechanisms are known. US 5,731,756, for example, provides a control unit for allowing a user to actuate various home security systems such as garage door openers, home alarm systems, lights, etc., remotely. The transmitter is provided with encryption logic such that its signal is not easily duplicated. US 7,822,206 B2 furthermore describes systems, methods and media for managing and generating encryption keys.

US 2008/018448 A1 describes a system for monitoring at least one parameter of vehicle tire that includes a receiver and a transmitter. The transmitter corresponds to the tire and has a programmable memory storing a code and one of a set of locally unique identifiers. The transmitter generates an encrypted portion of a transmitted signal based on the locally unique identifier and the code. The transmitter generates a data portion of the transmitted signal based on sensing at least one parameter of the tire. The receiver stores a set of locally unique identifiers and the code. The receiver receives the transmitted signal. The encrypted portion is decrypted using at least one of the code and the locally unique identifiers to produce a decrypted portion. A check is made to determine if the decrypted portion matches one of the code and the locally unique identifiers and, if so, the data portion is processed.

EP 1 043 179 A2 describes a system for monitoring tire pressure of a vehicle, wherein the pressure of tires on a vehicle is detected by a sensor inside each tire and then transmitted to a control circuit inside the vehicle. A pressure indication is transmitted wirelessly using the Digital Enhanced Cordless Telecommunications protocol which minimizes interference from similar devices in other vehicles that are nearby. Circuitry inside each tire has a unique identification number which is transmitted along with the pressure indication. The control circuit includes a receiver for recovering the indication of the pressure.

WO 02/057097 A2 describes a tire inflation pressure monitoring and location determining method and apparatus. A wireless tire inflation pressure measurement device is used to obtain inflation pressure information for a tire of a vehicle and a signal therefrom may be used for determining the location of the tire. An identifier may be associated with the inflation pressure information for each wheel of the vehicle. Tire rotation speed may be determined by amplitude fluctuations of a radio frequency carrier from a radio frequency transmitter rotating with the wheel. Differences in wheel rotation speeds during a turn may be used in determining the location of each tire of the vehicle. An antenna to the radio frequency transmitter. A radio frequency identification (RFID) tag and pressure sensor may be used as the wireless tire inflation pressure measurement device and a RFID pickup coil may be provided in each wheel well for pickup of the inflation pressure signals from each RFID tag on a wheel.

CN 102 285 306 A describes a method for preventing data collision of tire pressure monitor system transmitters. The method comprises the following step that for any TPMS transmitter, the transmission time Ti of the TPMS transmitter in the ith transmission period=TFIX+Bandwidth*pseudorandom natural number N, wherein I is a natural number, TFIX is fixed time, and Bandwidth is band width and the Bandwidth=the maximum of (transmission period-TFIX)/N.

It is one object of the present invention to provide a method and a system for monitoring a parameter of a tire of a vehicle using a wheel unit assigned to the tire with improved security.

This object is solved by a method according to claim 1 and a system according to claim 11. The dependent claims describe embodiments of the present invention.

The invention comprises a method for monitoring a parameter of a tire of a vehicle using a wheel unit assigned to the tire, wherein the wheel unit is adapted to send data packets relating to the parameter of the tire to a vehicle based receiver.
According to this method at least a part of each data packet is encoded with an authentication marker by the wheel unit. At the receiver the encoded part of the received data packets is decoded with an expected authentication marker. Then at the receiver it is verified if the decoded data packets are valid.

The encoding with an authentication marker makes it much more difficult for external attackers to inject spoofed messages into the tire pressure monitoring system. In this way the security of the tire pressure monitoring system is improved. If the decoded data packets are valid, the data packets may be used to monitor the parameter of the tire.

The method according to the invention comprises the step of establishing shared knowledge between the wheel unit and the receiver, wherein the shared knowledge comprises a sequence of authentication markers. Based on the shared knowledge the receiver can determine expected authentication markers.

The step of establishing shared knowledge between the wheel unit and the receiver comprises the following steps: a first pseudo random number generator being part of the wheel unit and a second pseudo random number generator being part of the receiver are initialized with a same seed value. A first sequence of pseudo random numbers to be used as authentication markers at the wheel unit is generated using the first pseudo random number generator. Furthermore, a second sequence of pseudo random numbers to be used as authentication markers at the receiver is generated at the receiver using the second pseudo random number generator. Because both pseudo random number generators have been initialized with the same seed value the first and the second sequence are identical and constitute shared knowledge.

In one embodiment the step of establishing shared knowledge between the wheel unit and the receiver further comprises the step of generating a seed value based on a pressure value and/or a temperature value measured by the wheel unit. This has the advantage that no additional information needs to be transmitted from the wheel unit to the receiver because the pressure value and/or the temperature value have to be transmitted from the wheel unit to the receiver anyway.

The step of encoding may comprise the step of performing an XOR operation between at least a part of each data packet with the authentication marker and the step of decoding may comprise the step of performing an XOR operation between the encoded part of the data packets received at the receiver with an expected authentication marker. An XOR operation has the advantage that its function and its inverse function are the same. This makes the encoding and decoding easy and efficient.

The step of encoding may comprise the steps of assigning sending sequence numbers to the data packets at the wheel unit based on a sequence of a generation of the data packets and encoding at least a part of each data packet with the authentication marker of the first sequence corresponding to the sending sequence number of the data packet. This allows to choose an authentication marker based on the sending sequence number.

In one embodiment each data packet comprises a cyclic redundancy check value and the step of encoding at least a part of each data packet with the authentication marker of the first sequence corresponding to the sending sequence number of the data packet is a step of performing an XOR operation between the cyclic redundancy check value of each data packet and the authentication marker of the first sequence corresponding to the sending sequence number of the data packet. Using the cyclic redundancy check value for encoding and decoding with the authentication marker has the advantage that no additional validity check has to be introduced to the tire pressure monitoring system because in general tire pressure monitoring systems already use a cyclic redundancy check value in each data packet transmitted from the wheel unit to be able to detect transmission errors. Thus, the reuse of the cyclic redundancy check value for authentication purposes allows to keep the data format of the packets constant.

The step of decoding may comprise the steps of assigning receipt sequence numbers to the data packets at the receiver based on a sequence of a receipt of the data packets at the receiver and applying to each received data packet the authentication marker of the second sequence corresponding to the receipt sequence number of the data packet to decode the encoded part of the data packets. This allows to choose the right authentication marker based on the sequence in which the data packets have been received at the receiver.

In one embodiment each data packet comprises a field for a cyclic redundancy check value and the step of applying to each received data packet the authentication marker of the second sequence corresponding to the receipt sequence number of the data packet is a step of performing an XOR operation between a value stored in the field for the cyclic redundancy check value of each received data packet and the authentication marker of the second sequence corresponding to the receipt sequence number of the data packet. The usage of the cyclic redundancy check value for encoding and decoding purposes has the advantage that an already present validity check can be reused and the data format of the data packets may remain constant.

In one embodiment the method according to the invention further may perform the following steps if a decoded data packet is invalid: an authentication marker of the second sequence corresponding to a receipt sequence number before or after the receipt sequence number of the received data packet is a applied to a received data packet corresponding to the invalid decoded data packet to decode the encoded part of the received data packet. Then it is verified if the decoded data packet is valid. If the decoded data packet is valid, the decoded data packet is marked as suspicious and/or the receipt sequence numbers are resynchronized to account for lost data packets or additionally received data packets. In this way the robustness of the proposed method is improved. The background of these additional steps is that it may happen that data packets sent by the wheel unit get lost because of, for example, a spamming signal. Furthermore, additional packets may be received during an external attack. However, the receiver should be able to choose the correct authentication marker to decode the received data packet. Therefore, if a packet gets lost or an additional packet is received preferably a resynchronization is carried out such that the method works correctly again.

To find the correct authentication marker a predetermined number of authentication markers corresponding to receipt sequence numbers directly preceding or directly succeeding the receipt sequence number of the received data packet may be applied to the received data packet. Thus, the predetermined number describes the window around the receipt sequence number that is used to try to decode a data packet that is invalid if it is decoded with the authentication marker corresponding to the receipt sequence number.

Furthermore, the present invention comprises a system for monitoring a parameter of a tire of a vehicle comprising a wheel unit assigned to the tire and a vehicle based receiver. The wheel unit is adapted to send data packets relating to the parameter of the tire to the vehicle based receiver. In addition, the wheel unit is adapted to encode at least a part of each data packet with an authentication marker. The receiver is adapted to decode the encoded part of the data packets received at the receiver with an expected authentication marker and is adapted to verify if the decoded data packets are valid.

The invention has been mainly described with reference to a method. If not stated otherwise, the features of the method are also applicable to the system according to the invention. This may mean that the wheel unit and the receiver of the system are adapted to perform the steps described with reference to the method or that the system according to the invention comprises the necessary means to perform the mentioned method steps. To avoid unnecessary repetitions it is refrained from repeating the features of the method again with reference to the system.

Of course, the wheel unit comprises the first pseudo random number generator and the receiver comprises the second pseudo random number generator like already mentioned before. Furthermore both, the wheel unit and the receiver, comprise a seed value generator.

Further details of embodiments of the present invention and further advantages of the invention will be described in the following with reference to the figures, wherein the figures show the following:
- Figure 1: one embodiment of a system for monitoring a parameter of a tire of a vehicle according to the invention;
- Figure 2: one embodiment of a wheel unit according to the invention;
- Figure 3: one embodiment of a receiver according to the invention;
- Figure 4: a method for monitoring a parameter of a tire of a vehicle; and
- Figure 5: an embodiment of a method for monitoring a parameter of a tire of a vehicle according to the invention.

In the following the same features or features having the same effect are marked with the same reference signs if not described otherwise.

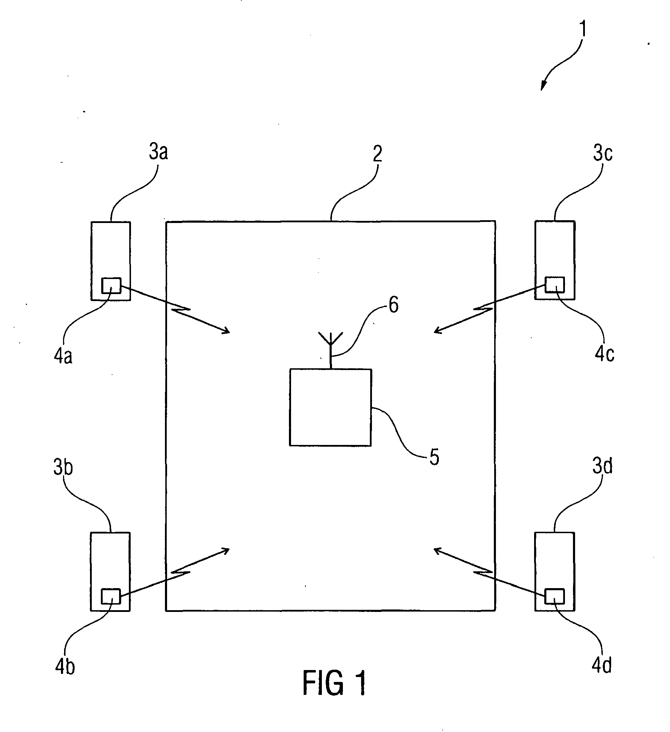

Figure 1 shows one embodiment of a system for monitoring a parameter of a tire of a vehicle according to the invention. The system 1 comprises a vehicle body 2 and for wheels 3a, 3b, 3c, 3d. Each wheel 3a-3d comprises a wheel unit 4a, 4b, 4c, 4d. Each wheel unit 4a-4d sends data packets to a central receiver 5 having an antenna 6 which is located on the side of the vehicle body 2.

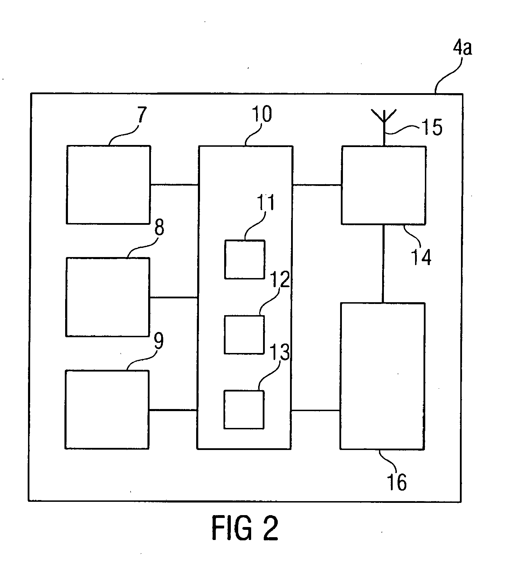

Figure 2 shows exemplarily the wheel unit 4a in detail. It comprises a pressure sensor 7 to measure the air pressure within the tire, a temperature sensor 8 to measure the temperature of the air within the tire in order to be able to compensate the effect of the temperature on the air pressure and an accelerometer 9 to measure the rotation of the tire. The pressure sensor 7, the temperature sensor 8 and the accelerometer 9 are connected to a control unit 10 which comprises a first pseudo random number generator 11, a seed generator 12 and an encoder 13. The seed generator 12 is able to generate a seed with which the first pseudo random number generator 11 is initialized. The encoder 13 uses the pseudo random numbers generated by the first pseudo random number generator 11 based on the generated seed to encode data packets that are sent to the vehicle based receiver 5. The first pseudo random number generator 11, the seed generator 12 and the encoder 13 may be implemented using software. The control unit 10 uses the sending unit 14 having an antenna 15 to send the data packets to the receiver 5. The control unit 10 and the sending unit 14 are supplied with energy by a battery 16.

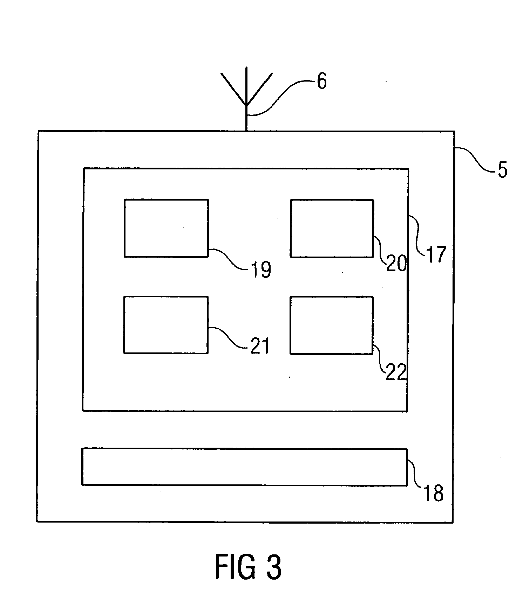

Figure 3 illustrates one embodiment of the receiver 5 according to the invention. The receiver 5 possesses the antenna 6 and comprises a control unit 17 and a storage 18. The control unit 17 comprises a seed generator 19, a second pseudo number generator 20, a decoder 21 and a validity checker 22. The seed generator 19 may be able to generate a seed value based on a pressure value and/or a temperature value received from the wheel unit 4a-4d. Based on the seed value the second pseudo random number generator 20 generates a second sequence of pseudo random numbers that are used by the decoder to decode received data packets. After the decoding the validity checker verifies if the decoded data packet is valid.

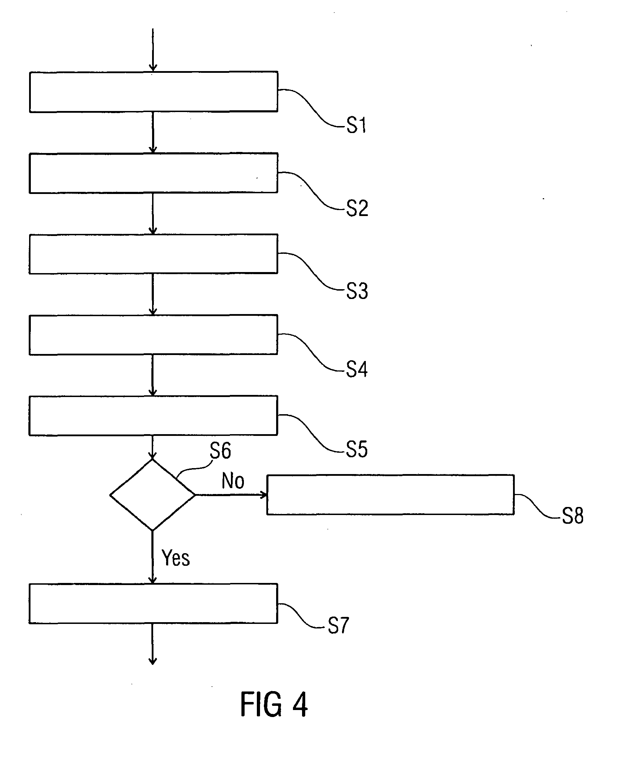

Figure 4 illustrates a method for monitoring a parameter of a tire of a vehicle. In step S1 data packets are generated by the wheel unit. At least a part of each data packet is encoded with an authentication marker in step S2. Then, the encoded data packets are send in step S3 by the wheel unit and are received in step S4 at the receiver. The encoded parts of the data packets received at the receiver are decoded in step S5 with an expected authentication marker. In step S6 it is verified at the receiver if the decoded data packets are valid. If they are valid, they are used in step S7. If the decoded data packets are invalid, an error handling routine is performed in step S8.

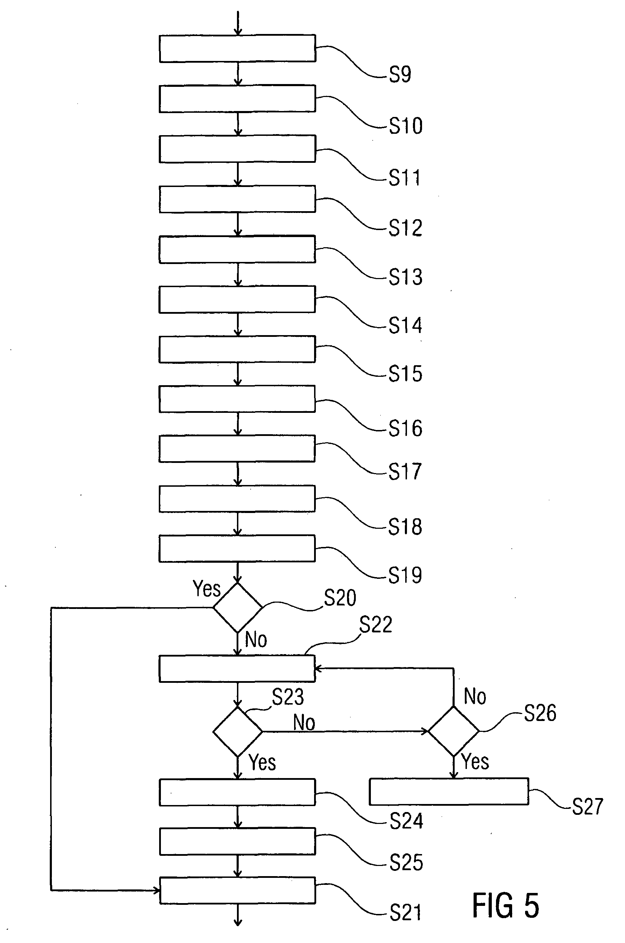

Figure 5 shows an embodiment of a method for monitoring a parameter of a tire of a vehicle according to the invention. In Step S9 a seed value is generated based on a pressure value and/or a temperature value measured by the wheel unit. Because the pressure value and/or the temperature value have been sent to the receiver the seed value can also be generated on the receiver. Please note that for each pair of a wheel unit and the receiver a seed value is generated. This also means that the second pseudo random number generator of the receiver generates four second sequences of pseudo random numbers (one second sequence for each wheel unit) if four wheel units are used. In the following the method is described only for one pair of the wheel unit and the receiver. In step S10 the first pseudo random number generator located on the wheel unit and the second pseudo random number generator located on the receiver are initialized with the seed value. A first sequence of pseudo random numbers to be used as authentication markers at the wheel unit is generated by the first pseudo random number generator in step S11 and a second sequence of pseudo random numbers to be used as authentication markers at the receiver is generated by the second pseudo random number generator which is responsible for the wheel unit in step S12.

In step S13 data packets are generated by the wheel unit. In step S14 sending sequence numbers are assigned to the data packets at the wheel unit based on a sequence of a generation of the data packets. At least a part of each data packet is encoded in step S15 with the authentication marker of the first sequence corresponding to the sending sequence number of the data packet. In the shown embodiment this is accomplished by performing an XOR operation between the cyclic redundancy check value of each data packet and the authentication marker of the first sequence corresponding to the sending sequence number of the data packet.

In step S16 the data packets are sent by the wheel unit and are received on the receiver in step S17. In step 18 receipt sequence numbers are assigned to the data packets at the receiver based on a sequence of a receipt of the data packets at the receiver. To each received data packet the authentication marker of the second sequence corresponding to the receipt sequence number of the data packet is applied in step S19 to decode the encoded part of the data packets. In the shown embodiment this is accomplished by performing an XOR operation between a value stored in the field for the cyclic redundancy check value of each received data packet and the authentication marker of the second sequence corresponding to the receipt sequence number of the data packet.

In step S20 it is verified whether the decoded data packets are valid. If they are valid, they are used in step S21. Otherwise in step S22 an authentication marker of the second sequence corresponding to a receipt sequence number before or after the receipt sequence number of a received data packet is applied to the received data packet corresponding to the invalid decoded data packet to decode the encoded part of the received data packet. In step S23 it is again checked whether the decoded data packet is valid. If it is valid, the decoded data packet is marked as suspicious in step S24 and in step S25 the receipt sequence numbers are resynchronized to account for lost data packets or additionally received data packets. Then the method jumps to step S21 where the data packets are used.

If it is decided in step S23 that the decoded data packet is still invalid, it is verified in step 26 whether a predetermined number of authentication markers corresponding to receipt sequence numbers directly preceding or directly succeeding the receipt sequence number of the received data packet has already been applied to the received data packet. If there are still receipt sequence numbers left within the predetermined number of authentication markers the corresponding authentication markers are used to try to decode the received data packet in step S22. If the predetermined number of authentication markers has already been applied to the receive data packet and the data packet is still invalid, the data packet is discarded in step S27.

With the invention it is possible to prevent spoofing attacks. The invention does not have any impact on tooling. This means that the same diagnosis tools etc. can be used as before. Furthermore, the invention has no impact on existing functions like automatic wheel learning and localization of the wheels. The method according to the invention may have the advantage that only minimal changes to the current sensor architecture and no change of the radio frequency protocol are needed. Furthermore, no change of the hardware is necessary. The already present function for verifying whether a data packet is valid may be reused. The seed value may be generated based on data that is exchanged between the wheel unit and the receiver anyway. The exchange may be performed, for example, in the so called first block mode which is activated before the driving mode. During this exchange (when the wheel unit is paired with the receiver) the authentication marker is not applied. Due to the pseudo random number generator, even if an adversary has access to the most recent or even several past values of the authentication markers and actual frames they are associated with, still the authentication marker value associated with the next transmission is unguessable. The pseudo random number generators may be initialized at each driving cycle start using a seed value which is based on the vehicle driving history.

The employed pseudo random number generators may be very light. Eight bits may be sufficient. Though a pseudo random number generator on an eight bits basis does not have a sufficiently great periodicity, the authentication may be still suitable and enough for tire pressure monitoring systems because of the so called ad hoc security and the emission period of 60 seconds. Due to this emission period the time which is necessary for an attacker to gather enough information to compute the authentication marker increases greatly. To observe a full period of 256 rounds a time of approximately 4,25 hours is necessary. There are much more efficient methods to compel a car to stop.

The description of the figures has to be understood in a merely illustrative and not a restrictive manner. Various modifications may be made to the described embodiments without departing from the scope of the invention as set forth in the appended claims.

### Reference signs

- 1: one embodiment of a system for monitoring a parameter of a tire of a vehicle
- 2: vehicle body
- 3a-3d: wheel
- 4a-4d: wheel unit
- 5: receiver
- 6: antenna
- 7: pressure sensor
- 8: temperature sensor
- 9: accelerometer
- 10: control unit
- 11: first pseudo random number generator
- 12: seed generator
- 13: encoder
- 14: sending unit
- 15: antenna
- 16: battery
- 17: control unit
- 18: storage
- 19: seed generator
- 20: second pseudo random number generator
- 21: decoder
- 22: validity checker
- S1: generating data packets
- S2: encoding at least a part of each data packet with an authentication marker
- S3: sending data packets
- S4: receiving data packets
- S5: decoding the encoded part of the data packets received at the receiver with an expected authentication marker
- S6: is the decoded data packet valid?
- S7: using the data packet
- S8: error handling
- S9: generating a seed value on the wheel unit and on the receiver
- S10: initializing the first pseudo random number generator and the second pseudo random number generator with the seed value
- S11: Generating a first sequence of pseudo random numbers at the wheel unit using the first pseudo number generator
- S12: Generating a second sequence of pseudo random numbers at the receiver using the second random number generator
- S13: generating data packets
- S14: Assigning sending sequence numbers to the data packets based on a sequence of a generation of the data packets
- S15: performing an XOR operation between the cyclic redundancy check value of each data packet and the authentication marker of the first sequence corresponding to the sending sequence number of the data packet
- S16: sending the data packets
- S17: receiving the data packets on the receiver
- S18: assigning receipt sequence numbers to the data packets at the receiver based on a sequence of a receipt of the data packets at the receiver
- S19: performing an XOR operation between a value stored in the field for the cyclic redundancy check value of each received data packet and the authentication marker of the second sequence corresponding to the receipt sequence number of the data packet
- S20: is the decoded data packet valid?
- S21: using the decoded data packet
- S22: applying an authentication marker of the second sequence corresponding to a receipt sequence number before or after the receipt sequence number of a received data packet to the received data packet corresponding to the invalid decoded data packet
- S23: is the decoded data packet valid?
- S24: marking the decoded data packet as suspicious
- S25: resynchronizing the receipt sequence numbers
- S26: has the predetermined number of authentication markers already been applied to the received data packet?
- S27: discarding the received data packet

## Claims

1. Method for monitoring a parameter of a tire of a vehicle using a wheel unit (4a-4d) assigned to the tire, wherein the wheel unit is adapted to send data packets relating to the parameter of the tire to a vehicle based receiver (5), the method comprising the steps of
- encoding (S2, S15) at least a part of each data packet with an authentication marker by the wheel unit,
- decoding (S5, S19) the encoded part of the data packets received at the receiver with an expected authentication marker,
- verifying (S6, S20) at the receiver if the decoded data packets are valid,
- establishing shared knowledge between the wheel unit and the receiver (S9-S12), wherein the shared knowledge comprises a sequence of authentication markers,
**characterized in that** the step of establishing shared knowledge between the wheel unit and the receiver comprises the steps of
- initializing (S10) a first pseudo random number generator being part of the wheel unit and a second pseudo random number generator being part of the receiver with a same seed value,
- generating a first sequence (S11) of pseudo random numbers to be used as authentication markers at the wheel unit using the first pseudo random number generator, and
- generating a second sequence (S12) of pseudo random numbers to be used as authentication markers at the receiver using the second pseudo random number generator, such that the first and the second sequence are identical and constitute shared knowledge.

2. Method according to claim 1, with the step, if the decoded data packets are valid, using (S7, S21) the data packets to monitor the parameter of the tire.

3. Method according to claim 1 or claim 2, wherein the step of establishing shared knowledge between the wheel unit and the receiver further comprises the step of generating a seed value (S9) based on a pressure value and/or a temperature value measured by the wheel unit.

4. Method according to one of the preceding claims, wherein the step of encoding (S15) comprises a step of performing an XOR operation between at least a part of each data packet with the authentication marker and the step of decoding (S19) comprises a step of performing an XOR operation between the encoded part of the data packets received at the receiver with an expected authentication marker.

5. Method according to one of the preceding claims, wherein the step of encoding comprises the steps of
- assigning (S14) sending sequence numbers to the data packets at the wheel unit based on a sequence of a generation of the data packets and
- encoding (S15) at least a part of each data packet with the authentication marker of the first sequence corresponding to the sending sequence number of the data packet.

6. Method according to claim 5, wherein each data packet comprises a cyclic redundancy check value and the step of encoding (S15) at least a part of each data packet with the authentication marker of the first sequence corresponding to the sending sequence number of the data packet is a step of performing an XOR operation between the cyclic redundancy check value of each data packet and the authentication marker of the first sequence corresponding to the sending sequence number of the data packet.

7. Method according to one of the preceding claims, wherein the step of decoding comprises the steps of
- assigning (S18) receipt sequence numbers to the data packets at the receiver based on a sequence of a receipt of the data packets at the receiver and
- applying (S19) to each received data packet the authentication marker of the second sequence corresponding to the receipt sequence number of the data packet to decode the encoded part of the data packets.

8. Method according to claim 7, wherein each data packet comprises a field for a cyclic redundancy check value and the step of applying (S19) to each received data packet the authentication marker of the second sequence corresponding to the receipt sequence number of the data packet is a step of performing an XOR operation between a value stored in the field for the cyclic redundancy check value of each received data packet and the authentication marker of the second sequence corresponding to the receipt sequence number of the data packet.

9. Method according to one of the preceding claims, with the further steps of, if a decoded data packet is invalid,
- applying (S22) an authentication marker of the second sequence corresponding to a receipt sequence number before or after the receipt sequence number of a received data packet to the received data packet corresponding to the invalid decoded data packet to decode the encoded part of the received data packet,
- verifying if the decoded data packet is valid (S23), and,
- if the decoded data packet is valid, marking the decoded data packet as suspicious (S24) and/or resynchronizing (S25) the receipt sequence numbers to account for lost data packets or additionally received data packets.

10. Method according to claim 9, wherein a predetermined number of authentication markers corresponding to receipt sequence numbers directly preceding or directly succeeding the receipt sequence number of the received data packet is applied to the received data packet.

11. System for monitoring a parameter of a tire of a vehicle comprising a wheel unit (4a-4d) assigned to the tire and a vehicle based receiver (5), wherein
- the wheel unit is adapted to send data packets relating to the parameter of the tire to the vehicle based receiver,
- the wheel unit is adapted to encode at least a part of each data packet with an authentication marker,
- the receiver is adapted to decode the encoded part of the data packets received at the receiver with an expected authentication marker,
- the receiver is adapted to verify if the decoded data packets are valid,
- the wheel unit comprises a first pseudo random number generator and the receiver comprises a second pseudo random number generator,
- both the wheel unit and the receiver comprise a seed value generator,
- the wheel unit and the receiver are adapted to perform the step of establishing shared knowledge between the wheel unit and the receiver, wherein the shared knowledge comprises a sequence of authentication markers,
**characterized in that** the step of establishing shared knowledge between the wheel unit and the receiver comprises the steps of
- initializing a first pseudo random number generator being part of the wheel unit and a second pseudo random number generator being part of the receiver with a same seed value,
- generating a first sequence of pseudo random numbers to be used as authentication markers at the wheel unit using the first pseudo random number generator, and
- generating a second sequence of pseudo random numbers to be used as authentication markers at the receiver using the second pseudo random number generator, such that the first and the second sequence are identical and constitute shared knowledge.

## Patentansprüche

1. Verfahren zur Überwachung eines Parameters eines Reifens eines Fahrzeugs unter Verwendung einer dem Reifen zugeordneten Radeinheit (4a bis 4d), wobei die Radeinheit angepasst ist, Datenpakete, die den Parameter des Reifens betreffen, an einen Empfänger (5) im/am Fahrzeug zu senden, wobei das Verfahren die folgenden Schritte umfasst:
- Codieren (S2, S15), mittels der Radeinheit, mindestens eines Teils jedes Datenpakets mit einer Authentifizierungskennung,
- Decodieren (S5, S19) des codierten Teils der im Empfänger empfangenen Datenpakete mit einer erwarteten Authentifizierungskennung,
- Verifizieren (S6, S20), im Empfänger, ob die decodierten Datenpakete gültig sind,
- Herstellen einer der Radeinheit und dem Empfänger gemeinsamen Wissensbasis (S9 bis S12), wobei die gemeinsame Wissensbasis eine Folge von Authentifizierungskennungen umfasst,
**dadurch gekennzeichnet, dass** der Schritt des Herstellens einer der Radeinheit und dem Empfänger gemeinsamen Wissensbasis die folgenden Schritte umfasst:
- Initialisieren (S10) eines ersten Pseudozufallszahlengenerators, der Teil der Radeinheit ist, und eines zweiten Pseudozufallszahlengenerators, der Teil des Empfängers ist, mit einem gleichen Startwert,
- Generieren einer ersten Folge (S11) von Pseudozufallszahlen mittels des ersten Pseudozufallszahlengenerators zur Verwendung als Authentifizierungskennungen in der Radeinheit, und
- Generieren einer zweiten Folge (S12) von Pseudozufallszahlen mittels des zweiten Pseudozufallszahlengenerators zur Verwendung als Authentifizierungskennungen im Empfänger, derart, dass die erste und die zweite Folge identisch sind und eine gemeinsame Wissensbasis darstellen.

2. Verfahren nach Anspruch 1, mit dem Schritt, wenn die decodierten Datenpakete gültig sind, eines Verwendens (S7, S21) der Datenpakete, um den Parameter des Reifens zu überwachen.

3. Verfahren nach Anspruch 1 oder Anspruch 2, wobei der Schritt des Herstellens einer der Radeinheit und dem Empfänger gemeinsamen Wissensbasis ferner den Schritt des Generierens eines Startwerts (S9) auf der Grundlage eines mittels der Radeinheit gemessenen Druckwerts und/oder Temperaturwerts umfasst.

4. Verfahren nach einem der vorhergehenden Ansprüche, wobei der Schritt des Codierens (S15) einen Schritt des Durchführens einer EXKLUSIV-ODER-Verknüpfung zwischen mindestens einem Teil jedes Datenpakets mit der Authentifizierungskennung umfasst und der Schritt des Decodierens (S19) einen Schritt des Durchführens einer EXKLUSIV-ODER-Verknüpfung zwischen dem codierten Teil der im Empfänger empfangenen Datenpakete und einer erwarteten Authentifizierungskennung umfasst.

5. Verfahren nach einem der vorhergehenden Ansprüche, wobei der Schritt des Codierens die folgenden Schritte umfasst:
- Zuordnen (S14) von Sendefolgenummern den Datenpaketen in der Radeinheit auf der Grundlage einer Abfolge einer Erzeugung der Datenpakete und
- Codieren (S15) mindestens eines Teils jedes Datenpakets mit der Authentifizierungskennung der ersten Folge entsprechend der Sendefolgenummer des Datenpakets.

6. Verfahren nach Anspruch 5, wobei jedes Datenpaket einen aus einer zyklischen Redundanzprüfung (CRC - Cyclic Redundancy Check) resultierenden Wert umfasst und der Schritt des Codierens (S15) mindestens eines Teils jedes Datenpakets mit der Authentifizierungskennung der ersten Folge entsprechend der Sendefolgenummer des Datenpakets ein Schritt ist, bei dem eine EXKLUSIV-ODER-Verknüpfung zwischen dem CRC-Wert jedes Datenpakets und der Authentifizierungskennung der ersten Folge entsprechend der Sendefolgenummer des Datenpakets durchgeführt wird.

7. Verfahren nach einem der vorhergehenden Ansprüche, wobei der Schritt des Decodierens die folgenden Schritte umfasst:
- Zuordnen (S18) von Empfangsfolgenummern den Datenpaketen im Empfänger auf der Grundlage einer Abfolge eines Empfangs der Datenpakete im Empfänger und
- Anwenden (S19), auf jedes empfangene Datenpaket, der Authentifizierungskennung der zweiten Folge entsprechend der Empfangsfolgenummer des Datenpakets, um den codierten Teil der Datenpakete zu decodieren.

8. Verfahren nach Anspruch 7, wobei jedes Datenpaket ein Feld für einen CRC-Wert umfasst und der Schritt des Anwendens (S19), auf jedes empfangene Datenpaket, der Authentifizierungskennung der zweiten Folge entsprechend der Empfangsfolgenummer des Datenpakets ein Schritt des Durchführens einer EXKLUSIV-ODER-Verknüpfung zwischen einem im Feld für den CRC-Wert gespeicherten Wert jedes empfangenen Datenpakets und der Authentifizierungskennung der zweiten Folge entsprechend der Empfangsfolgenummer des Datenpakets ist.

9. Verfahren nach einem der vorhergehenden Ansprüche, mit, wenn ein decodiertes Datenpaket ungültig ist, den weiteren Schritten:
- Anwenden (S22) einer Authentifizierungskennung der zweiten Folge entsprechend einer Empfangsfolgenummer vor oder nach der Empfangsfolgenummer eines empfangenen Datenpakets auf das empfangene Datenpaket, das dem ungültigen decodierten Datenpaket entspricht, um den codierten Teil des empfangenen Datenpakets zu decodieren,
- Verifizieren, ob das decodierte Datenpaket gültig ist (S23), und,
- wenn das decodierte Datenpaket gültig ist, Kennzeichnen des decodierten Datenpakets als verdächtig (S24) und/oder Resynchronisieren (S25) der Empfangsfolgenummern, um verlorengegangenen Datenpaketen oder zusätzlich empfangenen Datenpaketen Rechnung zu tragen.

10. Verfahren nach Anspruch 9, wobei eine im Voraus festgelegte Zahl Authentifizierungskennungen, die Empfangsfolgenummern entsprechen, die der Empfangsfolgenummer des empfangenen Datenpakets unmittelbar vorausgehen oder unmittelbar folgen, auf das empfangene Datenpaket angewendet wird.

11. System zur Überwachung eines Parameters eines Reifens eines Fahrzeugs, umfassend eine dem Reifen zugeordnete Radeinheit (4a bis 4d) und einen Empfänger (5) im/am Fahrzeug, wobei:
- die Radeinheit angepasst ist, Datenpakete, die den Parameter des Reifens betreffen, an den Empfänger im/am Fahrzeug zu senden,
- die Radeinheit angepasst ist, mindestens einen Teil jedes Datenpakets mit einer Authentifizierungskennung zu codieren,
- der Empfänger angepasst ist, den codierten Teil der im Empfänger empfangenen Datenpakete mit einer erwarteten Authentifizierungskennung zu decodieren,
- der Empfänger angepasst ist zu verifizieren, ob die decodierten Datenpakete gültig sind,
- die Radeinheit einen ersten Pseudozufallszahlengenerator umfasst und der Empfänger einen zweiten Pseudozufallszahlengenerator umfasst,
- sowohl die Radeinheit als auch der Empfänger einen Startwertgenerator umfasst,
- die Radeinheit und der Empfänger angepasst sind, den Schritt des Herstellens einer der Radeinheit und dem Empfänger gemeinsamen Wissensbasis auszuführen, wobei die gemeinsame Wissensbasis eine Folge von Authentifizierungskennungen umfasst,
**dadurch gekennzeichnet, dass** der Schritt des Herstellens einer der Radeinheit und dem Empfänger gemeinsamen Wissensbasis die folgenden Schritte umfasst:
- Initialisieren eines ersten Pseudozufallszahlengenerators, der Teil der Radeinheit ist, und eines zweiten Pseudozufallszahlengenerators, der Teil des Empfängers ist, mit einem gleichen Startwert,
- Generieren einer ersten Folge von Pseudozufallszahlen mittels des ersten Pseudozufallszahlengenerators zur Verwendung als Authentifizierungskennungen in der Radeinheit, und
- Generieren, einer zweiten Folge von Pseudozufallszahlen mittels des zweiten Pseudozufallszahlengenerators zur Verwendung als Authentifizierungskennungen im Empfänger, derart, dass die erste und die zweite Folge identisch sind und eine gemeinsame Wissensbasis darstellen.

## Revendications

1. Procédé destiné à surveiller un paramètre d'un pneumatique d'un véhicule en utilisant une unité roue (4a - 4d) attribuée au pneumatique, dans lequel l'unité roue est adaptée de façon à envoyer à un récepteur basé dans un véhicule (5), des paquets de données qui se rapportent au paramètre du pneumatique, le procédé comprenant les étapes consistant à :
- coder (S2, S15) une partie au moins de chaque paquet de données avec un marqueur d'authentification, par l'unité roue ;
- décoder (S5, S19) la partie codée des paquets de données reçus au niveau du récepteur avec un marqueur d'authentification attendu ;
- vérifier (S6, S20), au niveau du récepteur, si les paquets de données décodés sont valides ;
- établir une connaissance partagée entre l'unité roue et le récepteur (S9 - S12), dans lequel la connaissance partagée comprend une séquence de marqueurs d'authentification ;
**caractérisé en ce que** l'étape consistant à établir une connaissance partagée entre l'unité roue et le récepteur, comprend les étapes consistant à :
- initialiser (S10) un premier générateur de nombre pseudo-aléatoire qui fait partie de l'unité roue, et un second générateur de nombre pseudo-aléatoire qui fait partie du récepteur avec une même valeur de départ ;
- générer une première séquence (S11) de nombres pseudo-aléatoires à utiliser en tant que marqueurs d'authentification au niveau de l'unité roue en utilisant le premier générateur de nombre pseudo-aléatoire ; et
- générer une seconde séquence (S12) de nombres pseudo-aléatoires à utiliser en tant que marqueurs d'authentification au niveau du récepteur en utilisant le second générateur de nombre pseudo-aléatoire, de telle sorte que les première et seconde séquence soient identiques et constituent la connaissance partagée.

2. Procédé selon la revendication 1, comprenant l'étape consistant à utiliser (S7, S21) les paquets de données, si les paquets de données décodés sont valides, de façon à surveiller le paramètre du pneumatique.

3. Procédé selon la revendication 1 ou la revendication 2, dans lequel l'étape consistant à établir une connaissance partagée entre l'unité roue et le récepteur, comprend en outre une étape consistant à générer une valeur de départ (S9) sur la base d'une valeur de pression et / ou d'une valeur de température mesurée par l'unité roue.

4. Procédé selon l'une quelconque des revendications précédentes, dans lequel l'étape de codage (S15) comprend une étape consistant à exécuter une opération XOR entre une partie au moins de chaque paquet de données et le marqueur d'authentification, et l'étape de décodage (S19) comprend une étape consistant à exécuter une opération XOR entre la partie codée des paquets de données reçus au niveau du récepteur et un marqueur d'authentification attendu.

5. Procédé selon l'une quelconque des revendications précédentes, dans lequel l'étape de codage comprend les étapes consistant à :
- attribuer (S14) des numéros de séquence d'envoi aux paquets de données au niveau de l'unité roue, sur la base d'une séquence de génération de paquets de données ; et
- coder (S15) une partie au moins de chaque paquet de données avec le marqueur d'authentification de la première séquence qui correspond au numéro de séquence d'envoi du paquet de données.

6. Procédé selon la revendication 5, dans lequel chaque paquet de données comprend une valeur de contrôle cyclique par redondance et l'étape consistant à :
- coder (S15) une partie au moins de chaque paquet de données avec le marqueur d'authentification de la première séquence qui correspond au numéro de séquence d'envoi du paquet de données, qui est une étape consistant à exécuter une opération XOR entre la valeur de contrôle cyclique par redondance de chaque paquet de données et le marqueur d'authentification de la première séquence qui correspond au numéro de séquence d'envoi du paquet de données.

7. Procédé selon l'une quelconque des revendications précédentes, dans lequel l'étape de décodage comprend les étapes consistant à :
- attribuer (S18) des numéros de séquence de réception aux paquets de données au niveau du récepteur, sur la base d'une séquence de réception de paquets de données au niveau du récepteur ; et
- appliquer (S19) à chaque paquet de données reçu, le marqueur d'authentification de la seconde séquence qui correspond au numéro de séquence de réception du paquet de données, de façon à décoder la partie codée des paquets de données.

8. Procédé selon la revendication 7, dans lequel chaque paquet de données comprend un champ d'une valeur de contrôle cyclique par redondance, et l'étape consistant à appliquer (S19) à chaque paquet de données reçu, le marqueur d'authentification de la seconde séquence qui correspond au numéro de séquence de réception du paquet de données, est une étape qui consiste à exécuter une opération XOR entre une valeur stockée dans le champ de la valeur de contrôle cyclique par redondance de chaque paquet de données reçu, et le marqueur d'authentification de la seconde séquence qui correspond au numéro de séquence de réception du paquet de données.

9. Procédé selon l'une quelconque des revendications précédentes, comprenant en outre les étapes supplémentaires, si un paquet de données décodé n'est pas valide, consistant à :
- appliquer (S22) un marqueur d'authentification de la seconde séquence qui correspond à un numéro de séquence de réception qui se situe avant ou après le numéro de séquence de réception d'un paquet de données reçu, au paquet de données reçu, qui correspond au paquet de données décodé qui n'est pas valide de façon à décoder la partie codée du paquet de données reçu ;
- vérifier si le paquet de données décodé est valide (S23) ; et
- si le paquet de données décodé est valide, marquer le paquet de données décodé comme étant douteux (S24) et / ou resynchroniser (S25) les numéros de séquence de réception de façon à tenir compte des paquets de données perdus ou des paquets de données reçus en plus.

10. Procédé selon la revendication 9, dans lequel un nombre prédéterminé de marqueurs d'authentification qui correspondent à des numéros de séquence de réception qui précédent immédiatement ou qui suivent immédiatement le numéro de séquence de réception du paquet de données reçu, est appliqué au paquet de données reçu.

11. Système destiné à surveiller un paramètre d'un pneumatique d'un véhicule, comprenant une unité roue (4a - 4d) attribuée au pneumatique et un récepteur basé dans un véhicule (5), dans lequel :
- l'unité roue est adaptée de façon à envoyer au récepteur basé dans un véhicule, des paquets de données qui se rapportent au paramètre du pneumatique ;
- l'unité roue est adaptée de façon à coder une partie au moins de chaque paquet de données avec un marqueur d'authentification ;
- le récepteur est adapté de façon à décoder la partie codée des paquets de données reçus au niveau du récepteur avec un marqueur d'authentification attendu ;
- le récepteur est adapté de façon à vérifier si les paquets de données reçus sont valides ;
- l'unité roue comprend un premier générateur de nombre pseudo-aléatoire et le récepteur comprend un second générateur de nombre pseudo-aléatoire ;
- l'unité roue et le récepteur comprennent tous deux un générateur de valeur de départ ;
- l'unité roue et le récepteur sont adaptés de façon à exécuter une étape consistant à établir une connaissance partagée entre l'unité roue et le récepteur, dans lequel la connaissance partagée comprend une séquence de marqueurs d'authentification ;
**caractérisé en ce que** l'étape consistant à établir une connaissance partagée entre l'unité roue et le récepteur, comprend les étapes consistant à :
- initialiser un premier générateur de nombre pseudo-aléatoire qui fait partie de l'unité roue, et un second générateur de nombre pseudo-aléatoire qui fait partie du récepteur avec une même valeur de départ ;
- générer une première séquence de nombres pseudo-aléatoires à utiliser en tant que marqueurs d'authentification au niveau de l'unité roue en utilisant le premier générateur de nombre pseudo-aléatoire ; et
- générer une seconde séquence de nombres pseudo-aléatoires à utiliser en tant que marqueurs d'authentification au niveau du récepteur en utilisant le second générateur de nombre pseudo-aléatoire, de telle sorte que les première et seconde séquence soient identiques et constituent la connaissance partagée.
